# EUROPEAN PATENT APPLICATION

(11) **EP 4 307 734 A1**
(43) Date of publication of application: **17.01.2024**
(21) Application number: 21930692.5
(22) Date of filing: 15.03.2021
(51) Int. Cl.: H04W 4/48

(54) **OVER-THE-AIR TECHNOLOGY (OTA)-BASED COMMUNICATION METHOD AND APPARATUS**

(71) Applicant: Huawei Technologies Co., Ltd., Longgang Shenzhen, Guangdong 518129 (CN)
(72) Inventor: MA, Tao, Shenzhen, Guangdong 518129 (CN); ZHOU, Zheng, Shenzhen, Guangdong 518129 (CN); WANG, Yong, Shenzhen, Guangdong 518129 (CN)
(74) Representative: Huawei European IPR
(86) International application number: PCT/CN2021/080863
(87) International publication number: WO 2022/193096

(57) **Abstract**

Embodiments of this application provide an over-the-air technology OTA-based communication method and apparatus, and relate to the field of communication technologies. The method includes: obtaining first information and second information, where the first information includes first software version information and/or a first identification number, the second information includes a first mapping, the first mapping includes an association relationship between second software version information and a second identification number, and the identification number indicates permission information of a software version; and verifying, based on the first information and the second information, consistency between the first software version information and the second software version information corresponding to the first mapping. In this way, normal upgrade of vehicle software can be ensured in an OTA maintenance and software installation process, and further, vehicle safety is maintained.

## Description

### TECHNICAL FIELD

This application relates to the field of communication technologies, and in particular, to an over-the-air technology OTA-based communication method and apparatus.

### BACKGROUND

With development of autonomous driving, people have increasingly high requirements on computing and control capabilities of a vehicle. An increasing quantity of functions are provided to users in a form of software. Therefore, software-defined vehicles are becoming an important trend of vehicle development. When vehicle software needs to be installed or updated, an over-the-air technology (over-the-air technology, OTA) may be used to connect to a cloud to install or update the vehicle software.

However, when bringing convenience to people, the OTA also brings a challenge to admission of a vehicle. The admission may be understood as a process in which a series of tests for safety, emission, or the like are performed before the vehicle goes to the market, to meet a requirement of a related standard. Specifically, updating the vehicle software by using the OTA may change an admission parameter of the vehicle after the vehicle goes to the market. For example, after battery management software of the vehicle is upgraded by using the OTA, an endurance mileage of the vehicle may be increased, and the endurance mileage of the vehicle is inconsistent with an endurance mileage measured during admission. Further, data tested during admission of the vehicle may be invalid, and a test needs to be performed again. Therefore, a software version upgraded by using the OTA may be inconsistent with a software version used during admission. This brings a challenge to development of the OTA.

### SUMMARY

Embodiments of this application provide an over-the-air technology OTA-based communication method and apparatus, to ensure normal upgrade of vehicle software in an OTA maintenance and software installation process, and further maintain vehicle safety.

According to a first aspect, an embodiment of this application provides an OTA-based communication method. The method includes: obtaining first information and second information, where the first information includes first software version information and/or a first identification number, the second information includes a first mapping, the first mapping includes an association relationship between second software version information and a second identification number, and the identification number indicates permission information of a software version; and verifying, based on the first information and the second information, consistency between the first software version information and the second software version information corresponding to the first mapping.

In this way, consistency between the first information and the second information may be verified by using a matching relationship between an e identification number and a software version in the first information and the second information, so that in an OTA maintenance and software installation process, consistency between a software version and an identification number in a vehicle end and/or a server (or referred to as a cloud or cloud device) is maintained, to ensure normal upgrade of vehicle software and maintain vehicle safety.

With reference to the first aspect, in a possible implementation, the verifying, based on the first information and the second information, consistency between the first software version information and the second software version information corresponding to the first mapping includes: when the first software version information is inconsistent with the second software version information, and/or the first identification number is inconsistent with the second identification number, determining that the first software version information is inconsistent with the second software version information; or when the first software version information is consistent with the second software version information, and/or the first identification number is consistent with the second identification number, determining that the first software version information is consistent with the second software version information.

In this way, consistency between the first software version information and the second software version information may be verified by using the cloud or the vehicle end. Further, consistency between the software version and the identification number of the vehicle end and/or the cloud may be maintained, to prevent the software version and/or the identification number from being tampered with, and ensure normal upgrade of vehicle software upgraded by using an OTA.

With reference to the first aspect, in a possible implementation, the method further includes: when the first software version information is inconsistent with the second software version information, updating the first software version information and/or the first identification number; or when the first software version information is consistent with the second software version information, updating the first software version information and/or the first identification number.

In this way, the cloud and the vehicle end may maintain, based on a matching relationship between an identification number and a software version, consistency between the software version information and/or the identification number of the vehicle end and a mapping relationship of the cloud device, to eliminate a case in which a software version upgraded by using the OTA is inconsistent with a software version used during admission, and ensure normal upgrade of vehicle software.

With reference to the first aspect, in a possible implementation, before the updating the first software version information and/or the first identification number, the method further includes: sending a first task to a first vehicle, where the first task indicates to update the first software version information and/or the first identification number. When the first software version information is inconsistent with the second software version information, the first task includes the first mapping; or when the first software version information is consistent with the second software version information, the first task includes a second mapping. The second mapping includes an association relationship between third software version information and a third identification number. The third software version information is different from the second software version information, and/or the third identification number is different from the second identification number.

In this way, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

With reference to the first aspect, in a possible implementation, the method further includes: sending a first software package to the first vehicle, where the first software package is used to update software version information corresponding to the first vehicle. When the first software version information is inconsistent with the second software version information, the first software package includes the second identification number; or when the first software version information is consistent with the second software version information, the first software package includes the third identification number.

In this way, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

With reference to the first aspect, in a possible implementation, the method further includes: when the first software version information is inconsistent with the second software version information, sending the first software version information, the first identification number, and/or alarm information to a server and/or a display device of the first vehicle, where the alarm information indicates that an identification number and/or software version information of the first vehicle are/is inconsistent with a mapping relationship of the server.

In this way, the cloud device and/or the display device of the first vehicle can perform timely processing based on the alarm information sent by the vehicle end, to further ensure normal upgrade of vehicle software.

With reference to the first aspect, in a possible implementation, the updating the first software version information and/or the first identification number includes: receiving a first task from a server, where the first task indicates to update the first software version information and/or the first identification number. When the first software version information is inconsistent with the second software version information, the first task includes the first mapping; or when the first software version information is consistent with the second software version information, the first task includes a second mapping. The second mapping includes an association relationship between third software version information and a third identification number. The third software version information is different from the second software version information, and/or the third identification number is different from the second identification number.

In this way, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

With reference to the first aspect, in a possible implementation, the method further includes: receiving a first software package from the server, where the first software package is used to update software version information corresponding to the first vehicle. When the first software version information is inconsistent with the second software version information, the first software package includes the second identification number; or when the first software version information is consistent with the second software version information, the first software package includes the third identification number.

In this way, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

With reference to the first aspect, in a possible implementation, the first vehicle includes a plurality of electronic control units related to the first software package. Updating software in the first vehicle based on the first software package includes: sending the first software package corresponding to each electronic control unit to N electronic control units, where N is a positive integer; receiving N software installation results from the N electronic control units; and rolling back a vehicle software version and an identification number of the first vehicle when the N software installation results indicate that any one or more of N software packages fail to be installed.

In this way, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

With reference to the first aspect, in a possible implementation, alarm information from the first vehicle is received; and the alarm information is displayed.

With reference to the first aspect, in a possible implementation, the identification number includes a first regulation-related software identification number RXSWIN. In this way, a matching relationship between an RXSWIN and a software version may be used to ensure consistency between the RXSWIN and the software version in an OTA maintenance and software installation process, and ensure normal upgrade of vehicle software.

In this way, alarm information that is inside a system and that indicates inconsistency between the software version information and the identification number may be intuitively displayed to a user on a user interface. This helps the user to perform subsequent processing in a timely manner, and further ensures normal upgrade of vehicle software.

According to a second aspect, an embodiment of this application provides an OTA-based communication apparatus. A communication unit is configured to obtain first information and second information, where the first information includes first software version information and/or a first identification number, the second information includes a first mapping, the first mapping includes an association relationship between second software version information and a second identification number, and the identification number indicates permission information of a software version. A processing unit is further configured to: verify, based on the first information and the second information, consistency between the first software version information and the second software version information corresponding to the first mapping.

With reference to the second aspect, in a possible implementation, the processing unit is specifically configured to: when the first software version information is inconsistent with the second software version information, and/or the first identification number is inconsistent with the second identification number, determine that the first software version information is inconsistent with the second software version information; or when the first software version information is consistent with the second software version information, and/or the first identification number is consistent with the second identification number, determine that the first software version information is consistent with the second software version information.

With reference to the second aspect, in a possible implementation, the processing unit is further configured to: when the first software version information is inconsistent with the second software version information, update the first software version information and/or the first identification number; or when the first software version information is consistent with the second software version information, update the first software version information and/or the first identification number.

With reference to the second aspect, in a possible implementation, the communication unit is specifically configured to send a first task to a first vehicle, where the first task indicates to update the first software version information and/or the first identification number. When the first software version information is inconsistent with the second software version information, the first task includes the first mapping; or when the first software version information is consistent with the second software version information, the first task includes a second mapping. The second mapping includes an association relationship between third software version information and a third identification number. The third software version information is different from the second software version information, and/or the third identification number is different from the second identification number.

With reference to the second aspect, in a possible implementation, the communication unit is further configured to send a first software package to the first vehicle, where the first software package is used to update software version information corresponding to the first vehicle. When the first software version information is inconsistent with the second software version information, the first software package includes the second identification number; or when the first software version information is consistent with the second software version information, the first software package includes the third identification number.

With reference to the second aspect, in a possible implementation, the communication unit is further configured to: when the first software version information is inconsistent with the second software version information, send the first software version information, the first identification number, and/or alarm information to a server and/or a display device of the first vehicle, where the alarm information indicates that an identification number and/or software version information of the vehicle are/is inconsistent with a mapping relationship of the server.

With reference to the second aspect, in a possible implementation, the communication unit is specifically configured to receive a first task from a server, where the first task indicates to update the first software version information and/or the first identification number. When the first software version information is inconsistent with the second software version information, the first task includes the first mapping; or when the first software version information is consistent with the second software version information, the first task includes a second mapping. The third software version information is different from the second software version information, and/or the third identification number is different from the second identification number.

With reference to the second aspect, in a possible implementation, the communication unit is further configured to receive a first software package from the server, where the first software package is used to update software version information corresponding to the first vehicle. When the first software version information is inconsistent with the second software version information, the first software package includes the second identification number; or when the first software version information is consistent with the second software version information, the first software package includes the third identification number.

With reference to the second aspect, in a possible implementation, the communication unit is specifically configured to send the first software packages corresponding to N electronic control units to the N electronic control units, where N is a positive integer. The communication unit is specifically configured to receive N software installation results from the N electronic control units. The processing unit is specifically configured to roll back to a vehicle software version and an identification number of the first vehicle when the N software installation results indicate that any one or more of N software packages fail to be installed.

In a possible implementation, the communication unit is specifically configured to receive alarm information from the first vehicle, and a display unit is specifically configured to display the alarm information.

With reference to the second aspect, in a possible implementation, the identification number includes a first regulation-related software identification number RXSWIN.

According to a third aspect, an embodiment of this application provides a computer-readable storage medium. The computer-readable storage medium stores a computer program or instructions. When the computer program or the instructions are run on a computer, the computer is enabled to perform the OTA-based communication method according to any one of the first aspect or the possible implementations of the first aspect.

According to a fourth aspect, an embodiment of this application provides an OTA-based communication apparatus. The apparatus includes a processor and a memory. The memory stores instructions. When the instructions are run by the processor, the OTA-based communication method according to any one of the first aspect or the possible implementations of the first aspect is implemented.

According to a fifth aspect, this application provides a chip or a chip system. The chip or the chip system includes at least one processor and a communication interface. The communication interface and the at least one processor are interconnected through a line. The at least one processor is configured to run a computer program or instructions, to implement the OTA communication method according to any one of the first aspect or the possible implementations of the first aspect. The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

According to a sixth aspect, an embodiment of this application provides a computer program product. When the computer program product runs on one or more processors, the method according to any one of the first aspect or the possible implementations of the first aspect is performed.

It should be understood that the technical solutions of the second aspect to the sixth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a schematic diagram of a correspondence between an RXSWIN and a software version according to an embodiment of this application;
FIG. 2 is a schematic diagram of a first application scenario according to an embodiment of this application;
FIG. 3 is a schematic diagram of a system architecture for updating vehicle software according to an embodiment of this application;
FIG. 4 is a schematic diagram of a second application scenario according to an embodiment of this application;
FIG. 5 is a schematic diagram of a third application scenario according to an embodiment of this application;
FIG. 6 is a schematic flowchart of an OTA-based communication method according to an embodiment of this application;
FIG. 7 is a schematic flowchart of maintaining consistency between an identification number and software version information by a cloud according to an embodiment of this application;
FIG. 8 is a schematic flowchart of maintaining consistency between an identification number and software version information by a vehicle end according to an embodiment of this application;
FIG. 9 is a schematic diagram of an interface of displaying alarm information according to an embodiment of this application;
FIG. 10 is a schematic flowchart of performing consistency determining by a cloud according to an embodiment of this application;
FIG. 11 is a schematic flowchart of updating software according to an embodiment of this application;
FIG. 12 is a schematic flowchart of delivering a software package to a vehicle end by a cloud according to an embodiment of this application;
FIG. 13 is a schematic flowchart of installing a software package on a vehicle end according to an embodiment of this application;
FIG. 14 is another schematic flowchart of installing a software package on a vehicle end according to an embodiment of this application;
FIG. 15 is a schematic diagram of a structure of an OTA-based communication apparatus according to an embodiment of this application;
FIG. 16 is a schematic diagram of a hardware structure of a control device according to an embodiment of this application; and
FIG. 17 is a schematic diagram of a structure of a chip according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically a same function or purpose. For example, a first identification number and a second identification number are used to distinguish between different identification numbers, and a sequence of the first identification number and the second identification number is not limited. A person skilled in the art may understand that the terms such as "first" and "second" do not limit a quantity or an execution sequence, and the terms such as "first" and "second" do not indicate a definite difference.

It should be noted that, in this application, terms such as "an example" or "for example" are used to represent an example, an instance, or an illustration. Any embodiment or design scheme described as "an example" or "for example" in this application should not be construed as being more preferred or advantageous than other embodiments or design schemes. Exactly, use of the term such as "an example" or "for example" is intended to present a related concept in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one (piece) of a, b, or c may represent: a, b, c, a and b, a and c, b and c, or a, b, and c, where a, b, and c may be singular or plural.

With development of autonomous driving technologies, people have increasingly high requirements on computing and control capabilities of a vehicle. An increasing quantity of vehicle functions are provided to users in a form of software. Therefore, software-defined vehicles are becoming an important trend of vehicle development. The software-defined vehicle is required to be able to easily install and update software like a computer or a smartphone, so that various functions of the vehicle can be frequently used and updated. Generally, when vehicle software needs to be updated, a user may drive a vehicle to a 4S shop or a maintenance outlet, and a professional technician refreshes the vehicle software by using a dedicated device, to update the vehicle software. Vehicle OTA provides a technical means for remotely upgrading vehicle software or restoring a vehicle software defect. A user may use the OTA technology to connect to a cloud to download and install software. The OTA can reduce time and space restrictions on vehicle software upgrade. Therefore, the OTA is widely used in the vehicle field.

However, when bringing convenience to people, the OTA also brings a challenge to admission of the vehicle. The admission may be understood as a process in which a series of tests for safety, emission, or the like are performed before the vehicle goes to the market, so as to meet a requirement of a related standard. Specifically, a defect of the vehicle may cause significant personal and property losses. Therefore, the vehicle is a special product. Before going to the market, the vehicle needs to pass an admission test. The vehicle can enter the market only after passing the admission test. After a vehicle product is applied for and passes the admission test, an admission supervision organization of the vehicle may perform recording and announce admission information of the vehicle to society. After the announcement, the vehicle can be sold. The announcement may include basic information such as a wheel distance, a weight, or emission of the vehicle, and may further include technical feature parameter information such as an endurance mileage or a maximum vehicle speed.

To ensure production consistency of the vehicles after admission, a supervision department may periodically spot-check related parameters of vehicle products and compare the parameters with the announcement information. If the announcement information is inconsistent with admission parameters, the production consistency is violated, and a vehicle manufacturer may be required to perform rectification or a vehicle manufacturer may be required to implement measures such as production stop.

After the vehicle goes to the market, the vehicle software may be updated by using the OTA. However, in an update process, test parameters of the software measured during admission may be changed. For example, after battery management software of the vehicle is upgraded by using the OTA, an endurance mileage of the vehicle may be increased, and the endurance mileage of the vehicle is inconsistent with an endurance mileage measured during admission. Further, data tested during admission of the vehicle is invalid, and a test needs to be performed again. Therefore, a software version upgraded by using the OTA may be inconsistent with a software version used during admission. This brings a challenge to development of the OTA. Based on this, the United Nations World Forum for Harmonization of Vehicle Regulations subordinated to the United Nations Economic Commission for Europe (the United Nations Economic Commission for Europe, UNECE) establishes an OTA working group, to discuss incorporation of the OTA into an admission supervision system. It is mentioned that when OTA of a vehicle may affect admission consistency, an admission change needs to be applied for from the admission supervision organization before OTA upgrade is performed. To supervise such a change, a regulation-related software identification number (rx software identification number, RXSWIN) is proposed. The RXSWIN may record a relationship between a software version and admission. A function of the RXSWIN is to record and trace, from a perspective of an admission regulation, software and software upgrade that affect the admission, to facilitate the admission supervision organization to manage the vehicle software upgrade. A change of the RXSWIN may indicate an admission change caused by the software upgrade.

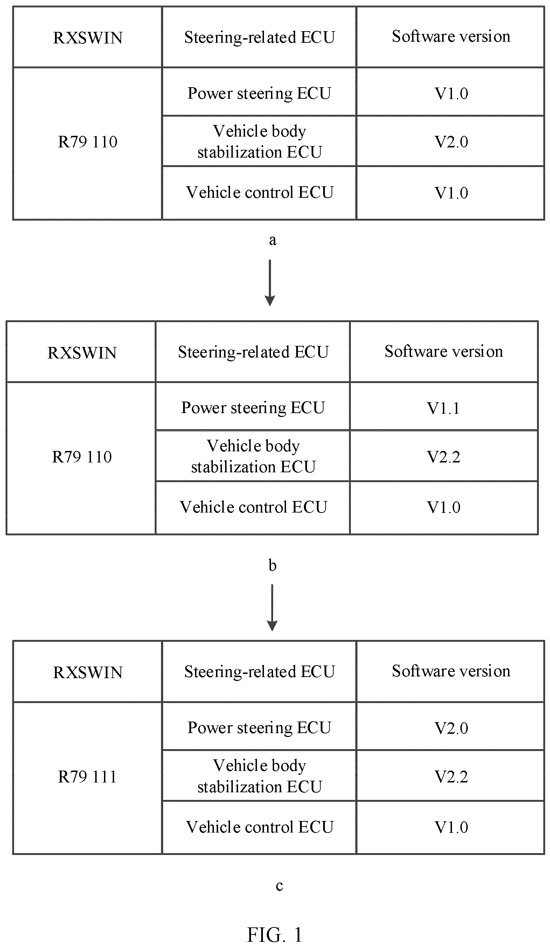

For example, FIG. 1 is a schematic diagram of a correspondence between an RXSWIN and a software version according to an embodiment of this application. As shown in a in FIG. 1, an initial RXSWIN and a software version corresponding to the initial RXSWIN may be configured during admission. For example, the initial RXSWIN is R79 110. A software version corresponding to R79 110 may include: a software version v1.0 corresponding to a power steering electronic control unit (electronic control unit, ECU), a software version v2.0 corresponding to a vehicle body stabilization ECU, and a software version v1.0 corresponding to a vehicle control ECU.

After software is upgraded by using the OTA, upgraded software may be shown in a schematic diagram of a correspondence between an upgraded RXSWIN and a software version, as shown in b in FIG. 1. In this case, the software upgraded by using the OTA does not change test data corresponding to the software during admission. Therefore, after the software that does not affect admission is upgraded, software version information associated with the RXSWIN may be changed, but the RXSWIN remains unchanged. In this case, a software version corresponding to R79 110 may include: a software version v1.1 corresponding to a power steering ECU, a software version v2.2 corresponding to a vehicle body stabilization ECU, and a software version v1.0 corresponding to a vehicle control ECU.

After the software is further upgraded by using the OTA, upgraded software may be shown in a schematic diagram of a matching relationship between an RXSWIN of upgraded software that affects admission and a software version, as shown in c in FIG. 1. After the software that affects admission is upgraded, software version information associated with the RXSWIN is changed, and the RXSWIN is changed. For example, the RXSWIN is changed from R79 110 to R79 111. In this case, a software version corresponding to R79 111 may include: a software version v2.0 corresponding to a power steering ECU, a software version v2.2 corresponding to a vehicle body stabilization ECU, and a software version v1.0 corresponding to a vehicle control ECU. The OTA upgrade enables the software version corresponding to the power steering ECU to be upgraded from original v1.1 to v2.0. The upgrade of the power steering ECU leads to a change of the test parameters corresponding to the software during admission. Therefore, the RXSWIN is changed from R79 110 to R79 111, and the RXSWIN identifies that the OTA upgrade affects the admission parameters.

In other words, as shown in FIG. 1, the RXSWIN may be applied to OTA-based software upgrade, and indicates a correspondence between the RXSWIN and a software version. However, in an OTA maintenance and software installation process, consistency between an RXSWIN and a software version on a vehicle end and a cloud cannot be ensured, and a case in which a software version upgraded by using the OTA is inconsistent with a software version used during admission cannot be well resolved. Consequently, it is difficult to maintain safe upgrade of vehicle software. Currently, there is no proper method for managing the RXSWIN and maintaining the consistency between the RXSWIN and the software version on the vehicle end and/or the cloud.

In view of this, embodiments of this application provide an OTA-based communication method and apparatus, to obtain first information and second information in an OTA maintenance and software installation process, and verify consistency between the first information and the second information by using a matching relationship between an identification number and a software version in the first information and the second information and based on the matching relationship between the identification number and the software version. Further, a case in which a software version upgraded by using the OTA is inconsistent with a software version used during admission can be eliminated by maintaining consistency between a software version and an identification number on a vehicle end and/or a cloud, to ensure normal upgrade of vehicle software.

Optionally, the identification number may be the RXSWIN.

To better understand the method in embodiments of this application, the following first describes an application scenario to which embodiments of this application are applicable.

In a possible implementation, the OTA-based communication method provided in embodiments of this application may be applied to OTA maintenance and upgrade scenarios of various types of vehicles, such as a scenario in which consistency between an identification number and a software version is maintained by exchanging data between a vehicle end and a cloud device, or a scenario in which vehicle software is downloaded or updated. There may be one or more vehicle ends and/or cloud devices.

The vehicle end (or referred to as a vehicle or a vehicle-end device) may be a vehicle in any form that performs software upgrade, a vehicle auxiliary device in any form (for example, a vehicle charging pile), or the like. This is not specifically limited in embodiments of this application.

The cloud (or referred to as a cloud device or a server) may be an OTA server configured to deliver a vehicle upgrade package, or may be a proxy server. For example, the proxy server may be a server serving a vehicle platoon. When the cloud device is the proxy server, the proxy server may first establish secure communication with the OTA server through two-way authentication. Then, the proxy server sends hardware and software information of the vehicle to the OTA server. After generating the vehicle upgrade package, the OTA server may deliver the vehicle upgrade package to the proxy server. It may be understood that the OTA server may alternatively split the vehicle upgrade package into blocks and deliver the blocks to a plurality of proxy servers.

Alternatively, the cloud may be a software client server configured to update software, or may be a platoon server or any other possible server that has obtained and updated software from a software client server.

Alternatively, the cloud may be a vehicle in any form, a vehicle auxiliary device in any form (for example, a vehicle charging pile), or a mobile terminal (for example, a mobile phone, a tablet, or a wearable device). This is not specifically limited in embodiments of this application.

The vehicle and the cloud device may establish a communication connection. For example, the vehicle and the cloud device may establish the communication connection by using a protocol like a hypertext transfer protocol (hypertext transfer protocol, HTTP) or a hypertext transfer protocol over secure socket layer (hypertext transfer protocol over secure socket layer, HTTPS). This is not limited in embodiments of this application.

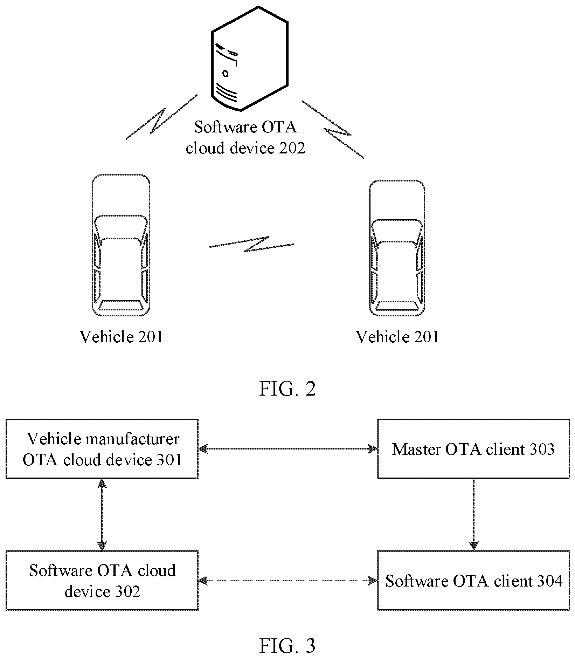

FIG. 2 is a schematic diagram of an example of a first application scenario according to an embodiment of this application. As shown in FIG. 2, the scenario may include a vehicle 201 and a software OTA cloud device 202. The vehicle 201 is a vehicle in any form on which a software OTA client is installed. The software OTA cloud device 202 is a server that provides OTA upgrade, and is configured to: store a software package, store a mapping relationship between an identification number (for example, an RXSWIN) and a software version, and the like. When updating software in the vehicle 201, the software OTA cloud device 202 may obtain software version information and/or an identification number of each piece of software on the software OTA client in the vehicle 201, and compare the software version information and/or the identification number with a mapping relationship that is between an identification number and a software version and that is stored in the software OTA cloud device 202. When the software version information and/or the identification number of each piece of software in the vehicle 201 are/is consistent with the mapping relationship, the software OTA cloud device 202 may automatically send or send, according to a request command of the software OTA client, a software package to the software OTA client in the vehicle 201, where the software package includes an identification number. The software OTA client in the vehicle 201 may update software and an identification number based on the software package from the software OTA cloud device.

There may be one or more vehicles 201 and one or more software OTA cloud devices 202. This is not specifically limited in this embodiment of this application.

In a possible implementation, the software OTA cloud device may alternatively be a vehicle manufacturer OTA cloud device. In this case, the vehicle manufacturer OTA cloud device may be an OTA server configured to deliver a vehicle upgrade package.

The following describes processes of implementing the software OTA cloud device and the vehicle manufacturer OTA cloud device in a vehicle. For example, FIG. 3 is a schematic diagram of a system architecture for updating vehicle software according to an embodiment of this application. As shown in FIG. 3, the system may include: a vehicle manufacturer OTA cloud device 301, a software OTA cloud device 302, a master OTA client 303, and a software OTA client 304.

The vehicle manufacturer OTA cloud device 301 may be a server of a vehicle manufacturer or a vehicle software service provider, and is configured to manage vehicle software and store software data. The vehicle software may include vehicle body control software and the like. The software OTA cloud device 302 may be configured to: store a software package, store a mapping relationship between an identification number and a software version, and the like. The vehicle manufacturer OTA cloud device 301 may interact with the software OTA cloud device 302. Software information of the vehicle manufacturer OTA cloud device 301 is from the software OTA cloud device 302, or the vehicle manufacturer OTA cloud device 301 may determine software information.

It should be noted that OTA upgrade in a vehicle may include two levels: a master node and a subordinate node. As shown in FIG. 3, the master OTA client 303 corresponds to the master node, and may receive a vehicle upgrade package, split the vehicle upgrade package, and distribute the split upgrade package to a plurality of subordinate clients controlled by the master OTA client 303. The software OTA client 304 corresponds to the subordinate node, and may be a subordinate OTA client controlled by the master OTA client 303. The software OTA client 304 may be used as a part of vehicle OTA upgrade to perform software update.

Therefore, there are two possible software update manners in the system architecture. In a possible implementation, the software OTA cloud device 302 interacts with the software OTA client 304, to update software. A specific implementation process is consistent with the description of the application scenario shown in FIG. 1. Details are not described herein again.

In another possible implementation, the vehicle manufacturer OTA cloud device 301, the master OTA client 303, and the software OTA client 304 interact with each other, to update the software. For example, the vehicle manufacturer OTA cloud device 301 may send, based on a mapping relationship that is between an identification number and a software version and that is stored in the vehicle manufacturer OTA cloud device 301, and consistency of a software version and/or an identification number that are/is obtained from the master OTA client 303 (or the software OTA client 304), a software package that needs to be updated to the master OTA client 302 by using a vehicle upgrade package. The master OTA client 302 receives and downloads the vehicle upgrade package, splits the vehicle upgrade package, and sends the split vehicle upgrade package to the software OTA client 304. The software OTA client 304 updates software and an identification number based on a software package in the split vehicle upgrade package.

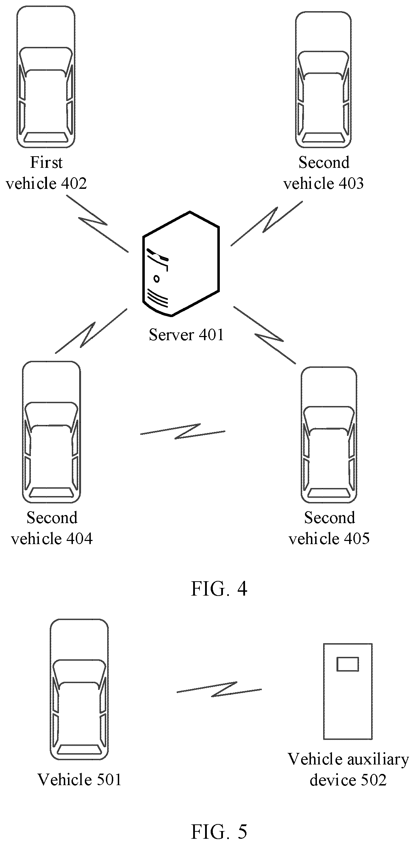

FIG. 4 is a schematic diagram of an example of a second application scenario according to an embodiment of this application. As shown in FIG. 4, the application scenario may include a server 401, a first vehicle 402, a second vehicle 403, a second vehicle 404, and a second vehicle 405.

The server 401 may be a vehicle platoon server. The vehicle platoon server may obtain, from an OTA server in advance, a vehicle upgrade package needed by a vehicle platoon (for example, including the first vehicle 402, the second vehicle 403, the second vehicle 404, and the second vehicle 405) served by the vehicle platoon server.

During routine maintenance of the vehicle platoon, in a case of network connection such as wireless fidelity (wireless-fidelity, Wi-Fi), the first vehicle 402, the second vehicle 403, the second vehicle 404, and the second vehicle 405 are connected to the vehicle platoon server. When receiving an upgrade package download notification, the vehicle platoon server performs two-way authentication (for example, an authentication manner based on a public key infrastructure) with the first vehicle 402, the second vehicle 403, the second vehicle 404, and the second vehicle 405. After the authentication succeeds, the vehicle platoon server encrypts (encrypts by using a public key of the vehicle) an encryption key k of the upgrade package, and delivers the encrypted encryption key k to the first vehicle 402, the second vehicle 403, the second vehicle 404, and the second vehicle 405.

For example, the first vehicle 402, the second vehicle 403, the second vehicle 404, and the second vehicle 405 may all decrypt a key by using the key k, and download vehicle software packages needed by the first vehicle 402, the second vehicle 403, the second vehicle 404, and the second vehicle 405 from the server. For example, the first vehicle 402 may complete software update based on a complete vehicle upgrade package. The vehicle upgrade package may include a software package used to update an identification number. The first vehicle 402 may update software and an identification number based on the software package.

FIG. 5 is a schematic diagram of an example of a third application scenario according to an embodiment of this application. As shown in FIG. 5, the application scenario may include a vehicle 501 and a vehicle auxiliary device 502. The vehicle 501 may be a vehicle in any form. The vehicle auxiliary device 502 may be a vehicle charging pile or any other terminal device (for example, a mobile phone or a tablet) that assists vehicle OTA update. The vehicle auxiliary device 502 may send, to the vehicle 501 based on a mapping relationship that is between an identification number and a software version and that is stored in the vehicle auxiliary device 502 and consistency of a software version and/or an identification number that are/is obtained from the vehicle 501, a software package that needs to be updated. The vehicle 501 may update software and an identification number based on the received software package.

To facilitate understanding of embodiments of this application, some terms in this application are first briefly described.
1. Vehicle OTA is a process in which a vehicle downloads a software update package from a remote server through a network to update a system of the vehicle. For example, but not limited to, each update of the vehicle OTA corresponds to one vehicle upgrade package and one vehicle version number, and one vehicle upgrade package includes software of a plurality of ECUs in the vehicle.
2. A vehicle manufacturer OTA cloud device refers to a cloud service provided by a vehicle manufacturer or a service provider. The vehicle manufacturer OTA cloud device is responsible for managing information about an upgrade task, a software upgrade package, an identification number, or the like on a cloud and delivering, in an OTA manner, the information to a vehicle whose software needs to be upgraded. In the OTA manner, access may be performed by using Wi-Fi, long term evolution (long term evolution, LTE), a 5th generation (5th generation, 5G) mobile communication system or a new radio (new radio, NR) system, a satellite, and the like.
3. A software OTA cloud device refers to a cloud service for software. The software OTA cloud device is responsible for managing information about specific vehicle software, an identification number, or the like on the cloud and delivering, in the OTA manner, the information to a user who requires upgrade or a vehicle that needs to be upgraded.
   It may be understood that the vehicle manufacturer OTA cloud device or the software OTA cloud device in embodiments of this application may be collectively referred to as an OTA cloud, and is configured to update software and an identification number.
4. A master node (update master, master node for short) is software deployed on an ECU in a vehicle. The master node is responsible for controlling vehicle OTA upgrade in a centralized manner, downloading a vehicle upgrade package from the OTA cloud, splitting the vehicle upgrade package, and distributing the split upgrade package to a corresponding ECU.
   Alternatively, the master node may be a module unit that exists independently on the vehicle. This is not limited in embodiments of this application.
5. An electronic control unit includes an autonomous driving controller, a cockpit controller, a telematics box (telematics box, T-Box), a gateway, and the like. For software upgrade of the ECU, a software upgrade package may be downloaded from the OTA cloud, and installed to perform upgrade. Alternatively, under centralized control and coordination of the master node, the master node splits a vehicle upgrade package and distributes the split vehicle upgrade package, to obtain a software upgrade package for upgrade.

The following describes in detail, by using specific embodiments, technical solutions of this application and how to resolve the foregoing technical problem by using the technical solutions of this application. The following several specific embodiments may be implemented independently or combined with each other, and same or similar concepts or processes may not be repeatedly described in some embodiments.

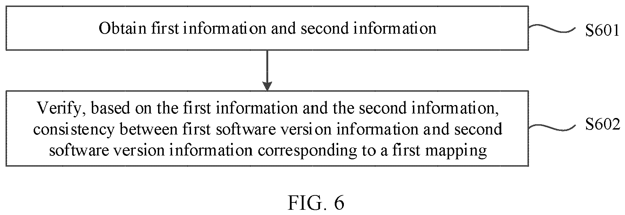

FIG. 6 is a schematic flowchart of an OTA-based communication method according to an embodiment of this application. As shown in FIG. 6, the method may include the following steps.

S601: Obtain first information and second information.

In this embodiment of this application, the first information and the second information may be information used on a vehicle end and/or a cloud to verify consistency between software version information and an identification number. For example, the first information may include first software version information and/or a first identification number, and the second information may include a first mapping. The first mapping includes an association relationship between second software version information and a second identification number. The first information may be from the vehicle end, and the second information may be from the cloud.

In this embodiment of this application, the identification number may indicate permission information of a software version. Permission may be understood as a limitation on allowing admission of a vehicle.

For example, the identification number may be another identifier like an RXSWIN. The software version information may be information used to identify different software versions. For example, the software version information may be other information about a software version number or the like.

It may be understood that the identification number and the software version information may include other content based on an actual scenario. This is not limited in this embodiment of this application.

For example, a subject for obtaining the first information and the second information may be the cloud or the vehicle end. When an execution subject is the cloud, the vehicle end may report the first information to the cloud, and then the cloud may receive the first information reported by the vehicle end, obtain the second information stored in the cloud, and further may verify consistency between the first information and the second information. Alternatively, when an execution subject is the vehicle end, the cloud may deliver the second information to the vehicle end, and then the vehicle end may receive the second information delivered by the cloud, obtain the first information stored in the vehicle end, and further may verify consistency between the first information and the second information.

S602: Verify, based on the first information and the second information, consistency between the first software version information and the second software version information corresponding to the first mapping.

In this embodiment of this application, the consistency between the first software version information and the second software version information corresponding to the first mapping may include the following cases: The first software version information is consistent with the second software version information, or the first software version information is inconsistent with the second software version information.

For example, there may be two subjects for verifying, based on the first information and the second information, consistency between the first software version information and the second software version information corresponding to the first mapping: the cloud or the vehicle end. It may be understood that an execution subject for verifying consistency between the first software version information and the second software version information corresponding to the first mapping is not limited in this embodiment of this application.

In conclusion, embodiments of this application provide an OTA-based communication method and apparatus, to obtain the first information from the vehicle end and the second information from the cloud in an OTA maintenance and software installation process, and verify consistency between the first information and the second information by using a matching relationship between the identification number and the software version in the first information and the second information. Further, a case in which a software version upgraded by using the OTA is inconsistent with a software version used during admission can be eliminated by maintaining consistency between a software version and an identification number on the vehicle end and/or the cloud, to ensure normal upgrade of vehicle software.

Based on the embodiment corresponding to FIG. 6, in a possible implementation, in the steps shown in S601 and S602, the execution subject for verifying consistency between the first software version information and the second software version information corresponding to the first mapping may be the cloud or the vehicle end.

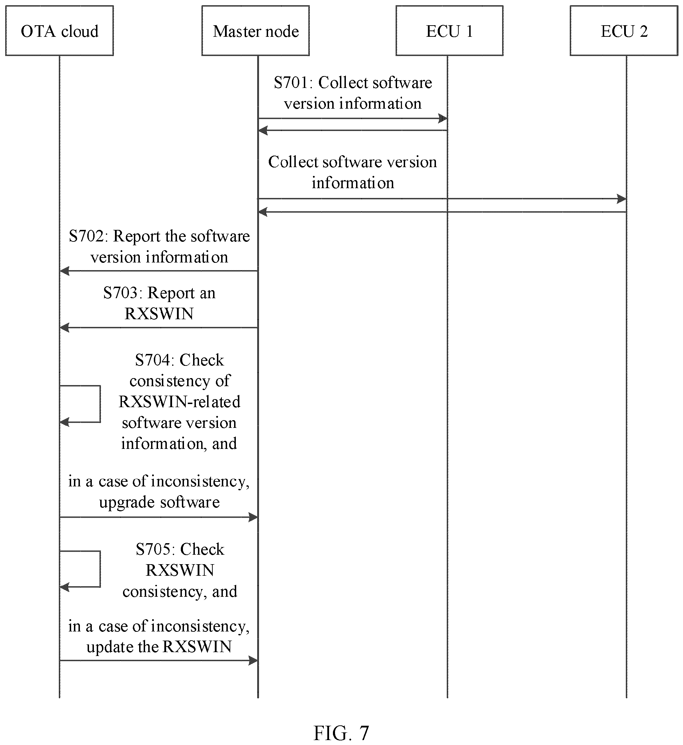

For example, in Manner 1, the cloud is used to verify consistency between the first software version information and the second software version information corresponding to the first mapping (as shown in an embodiment corresponding to FIG. 7).

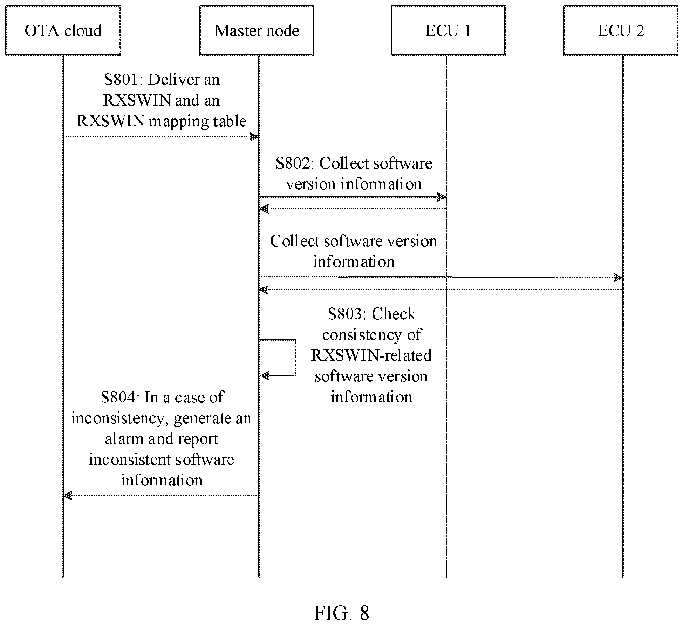

In Manner 2, the vehicle end is used to verify consistency between the first software version information and the second software version information corresponding to the first mapping (as shown in an embodiment corresponding to FIG. 8).

Manner 1: The cloud is used to verify consistency between the first software version information and the second software version information.

For example, FIG. 7 is a schematic flowchart of maintaining consistency between an identification number and software version information by a cloud according to an embodiment of this application. In the embodiment corresponding to FIG. 7, that the cloud verifies consistency between the first software version information and the second software version information based on the first information and the second information is described by using an example in which the cloud is an OTA cloud, the vehicle end includes a master node, an ECU 1, and an ECU 2, the identification number is an RXSWIN, and the first mapping is an RXSWIN mapping (including an association relationship between the RXSWIN and the software version information). This example does not constitute a limitation on this embodiment of this application.

As shown in FIG. 7, a process in which the cloud maintains consistency between the identification number and the software version information may include the following steps.

S701: The master node collects software version information on each ECU (including the ECU 1 and the ECU 2).

For example, the master node may periodically collect the software version information on each ECU. For example, it is set that the software version information on each ECU is collected once a week.

S702: The master node reports software version information of the vehicle end to the OTA cloud.

Adaptively, the OTA cloud receives the software version information reported by the vehicle end.

Optionally, when the vehicle end stores an RXSWIN identifier, the vehicle end may perform the step shown in S703.

S703: The master node reports the RXSWIN identifier of the vehicle end to the OTA cloud.

Adaptively, the OTA cloud receives the RXSWIN reported by the vehicle end.

S704: The OTA cloud checks consistency of RXSWIN-related software version information, and in a case of inconsistency, performs software upgrade.

For example, the OTA cloud compares the software version information reported in the step shown in S702 with an RXSWIN mapping table stored in the OTA cloud. When the software version information reported by the master node is inconsistent with software version information in the RXSWIN mapping table, it may indicate that admission-related software is modified in a non-compliance manner. In this case, the OTA cloud may upgrade the software by using the OTA, and modify the software version information of the vehicle end, to ensure consistency between the software version information of the vehicle end and the RXSWIN mapping table stored in the OTA cloud.

Optionally, when the vehicle end reports the RXSWIN identifier to the cloud, the cloud may perform the step shown in S705.

S705: The OTA cloud checks RXSWIN consistency, and in a case of inconsistency, updates the RXSWIN.

For example, the OTA cloud compares the RXSWIN identifier reported in the step shown in S703 with the RXSWIN mapping table stored in the OTA cloud. When the RXSWIN identifier reported by the vehicle end is inconsistent with an RXSWIN identifier in the RXSWIN mapping table, it may indicate that the RXSWIN of the vehicle end is tampered with. In this case, the OTA cloud may deliver an instruction to update the RXSWIN identifier of the vehicle end, to ensure consistency between the RXSWIN identifier of the vehicle end and the RXSWIN mapping table stored in the OTA cloud.

It may be understood that the OTA cloud may perform software upgrade based on determining of consistency between software version information of the vehicle end and that of the cloud in the step shown in S704, may perform software upgrade based on determining of consistency between the RXSWIN of the vehicle end and that of the cloud in the step shown in S705, or may determine whether to perform software upgrade based on consistency between software version information of the vehicle end and that of the cloud and consistency between the RXSWIN of the vehicle end and that of the cloud in the steps shown in S704 and S705.

Manner 2: The vehicle end is used to verify consistency between the first software version information and the second software version information.

For example, FIG. 8 is a schematic flowchart of maintaining consistency between an identification number and software version information by a vehicle end according to an embodiment of this application. In the embodiment corresponding to FIG. 8, that the vehicle end verifies consistency between the first software version information and the second software version information based on the first information and the second information is described by using an example in which the cloud is an OTA cloud, the vehicle end includes a master node, an ECU 1, and an ECU 2, the identification number is an RXSWIN, and the first mapping is an RXSWIN mapping (including an association relationship between the RXSWIN and the software version information). This example does not constitute a limitation on this embodiment of this application.

As shown in FIG. 8, a process in which the vehicle end maintains consistency between the identification number and the software version information may include the following steps.

S801: The OTA cloud delivers an RXSWIN and an RXSWIN mapping table to a master node.

Adaptively, the master node receives the RXSWIN and the RXSWIN mapping table delivered by the OTA cloud.

For example, when any RXSWIN identifier or any piece of software version information in the RXSWIN mapping table stored in the OTA cloud is changed, the OTA cloud may deliver a changed RXSWIN mapping table to the master node.

S802: The master node collects software version information on each ECU (including the ECU 1 and the ECU 2).

S803: The master node checks consistency of RXSWIN-related software version information.

S804: If the master node determines that the RXSWIN-related software version information is inconsistent, the master node may generate an alarm to the OTA cloud, and report the inconsistent software version information.

For example, if the master node determines that the software version information reported by each ECU in the step shown in S802 is inconsistent with software version information in the RXSWIN mapping table delivered by the OTA cloud, it may indicate that admission-related software of the vehicle end is modified in a non-compliance manner. In this case, the master node may report the inconsistent message to the OTA cloud.

Based on this, consistency between the first software version information and the second software version information is verified by using the cloud or the vehicle end. Further, consistency between the software version and the RXSWIN in the vehicle end and/or the cloud may be maintained, to prevent the software version and/or the RXSWIN from being tampered with, and ensure normal upgrade of vehicle software upgraded by using the OTA.

Based on the embodiment corresponding to FIG. 6, in a possible implementation, the method further includes the following steps.

S603 (not shown in the figure): When the first software version information is inconsistent with the second software version information, a first vehicle sends the first software version information, the first identification number, and/or alarm information to the cloud and/or a display device of the first vehicle.

Adaptively, the display device may receive the first software version information, the first identification number, and/or the alarm information from the first vehicle. The vehicle end described in this embodiment of this application may include the first vehicle.

In this embodiment of this application, the alarm information indicates that the identification number and/or the software version information of the vehicle are/is inconsistent with a mapping relationship of a server. The display device may be a central control display of the first vehicle, a dashboard display of the first vehicle, or another display device connected to the vehicle, for example, a mobile phone. In this embodiment of this application, the display device may include other content based on an actual scenario. This is not limited in this embodiment of this application.

S604 (not shown in the figure): The display device displays the alarm information.

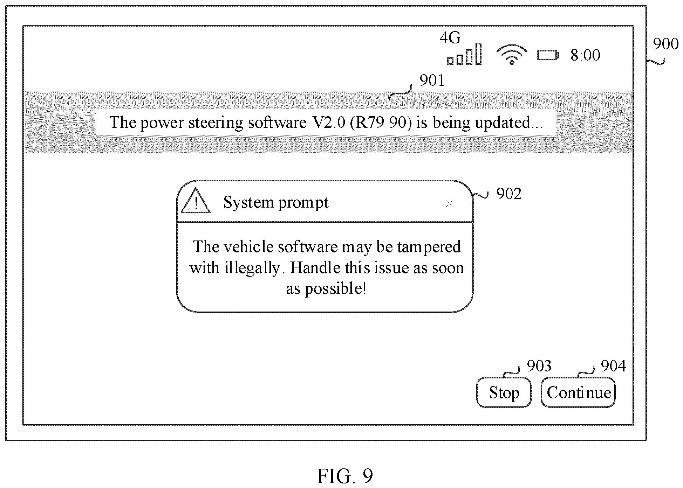

For example, FIG. 9 is a schematic diagram of an interface of displaying alarm information according to an embodiment of this application. As shown in FIG. 9, the interface may be an interface displayed on a central control display 900 of the first vehicle. The interface displayed on the central control display 900 may include content such as a software version update indication message 901, a system prompt message 902, a stop control 903, and a continue control 904. The indication message 901 displays "The power steering software V2.0 (R79 90) is being updated..." V2.0 may be software version information of the power steering software, and R79 90 may be an identification number corresponding to a software version of the power steering software.

Before software update is performed, when detecting that the first software version information is inconsistent with the second software version information, the first vehicle may send alarm information to the central control display 900, where the alarm information may be the system prompt message 902 displayed on the central control display 900. The system prompt message 902 displays "The vehicle software may be tampered with illegally. Handle this issue as soon as possible!" Subsequently, when seeing the prompt message, a user may trigger the stop control 903 to suspend the software update, or a user may drive the vehicle to a 4S shop for processing.

Based on this, alarm information that is inside a system and that indicates inconsistency between the software version information and the identification number may be intuitively displayed to the user on a user interface. This helps the user to perform subsequent processing in a timely manner, and further ensures normal upgrade of vehicle software.

Based on the embodiment corresponding to FIG. 6, in a possible implementation, S602 may include the following.

In an implementation, when the first software version information is inconsistent with the second software version information and/or the first identification number is inconsistent with the second identification number, it is determined that the first software version information is inconsistent with the second software version information.

It may be understood as the following: When the first software version information is inconsistent with the second software version information, the first identification number is inconsistent with the second identification number, or the first software version information is inconsistent with the second software version information and the first identification number is inconsistent with the second identification number, it is determined that the first software version information is inconsistent with the second software version information.

That the first software version information is inconsistent with the second software version information may be understood as the following: In this case, the first identification number may be consistent with the second identification number, or the first identification number may be inconsistent with the second identification number. That the first identification number is inconsistent with the second identification number may be understood as the following: In this case, the first software version information may be consistent with the second software version information, or the first software version information may be inconsistent with the second software version information.

In another implementation, when the first software version information is consistent with the second software version information and/or the first identification number is consistent with the second identification number, it is determined that the first software version information is consistent with the second software version information.

It may be understood as the following: When the first software version information is consistent with the second software version information, the first identification number is consistent with the second identification number, or the first software version information is consistent with the second software version information and the first identification number is consistent with the second identification number, it is determined that the first software version information is consistent with the second software version information.

Based on this, in a scenario in which the cloud delivers a first task, when the first software version information and/or the first identification number are/is consistent with a first mapping, it may be further ensured, based on consistency check, that vehicle software upgraded by using the OTA is normally upgraded. In a scenario in which the cloud and/or the vehicle end periodically check consistency between an identification number and software version information, when the first software version information and/or the first identification number are/is inconsistent with the first mapping, a non-compliance risk generated due to the inconsistency may be detected in a timely manner, to prevent the identification number and/or the software version information from being tampered with, and ensure that the vehicle software upgraded by using the OTA is normally upgraded.

Based on the embodiment corresponding to FIG. 6, in a possible implementation, the method further includes: when the first software version information is inconsistent with the second software version information, updating the first software version information and/or the first identification number; or when the first software version information is consistent with the second software version information, updating the first software version information and/or the first identification number.

In an implementation, a scenario in which the first software version information is inconsistent with the second software version information may be as follows: The first software version information of the vehicle end is inconsistent with the second software version information of the cloud because the first software version information and/or the first identification number of the vehicle end are/is tampered with. Further, the cloud may deliver the software version information and/or the identification number stored in the cloud to the vehicle end, to ensure consistency between the software version information of the cloud and that of the vehicle end and consistency between the identification number of the cloud and that of the vehicle end. The software version information and/or the identification number delivered by the cloud may be consistent with the software version information and/or the identification number stored on the vehicle end before the software version information and/or the identification number are/is tampered with. In this scenario, if the first software version information is consistent with the second software version information, update processing may not be performed on the first software version information and/or the first identification number.

For example, a process of updating the first software version information and/or the first identification number based on the inconsistency may be as that described in the embodiments corresponding to FIG. 7 and FIG. 8. Details are not described herein again.

In another implementation, a scenario in which the first software version information is consistent with the second software version information may be as follows: The cloud delivers the first task (or referred to as an update task). When the cloud determines that the first software version information and/or the first identification number reported by the vehicle end are/is consistent with the second software version information stored in the cloud, the cloud may deliver, to the vehicle end based on consistency assurance, software version information and/or an identification number carried in the first task. In this scenario, if the first software version information is inconsistent with the second software version information, update processing may not be performed on the first software version information and/or the first identification number.

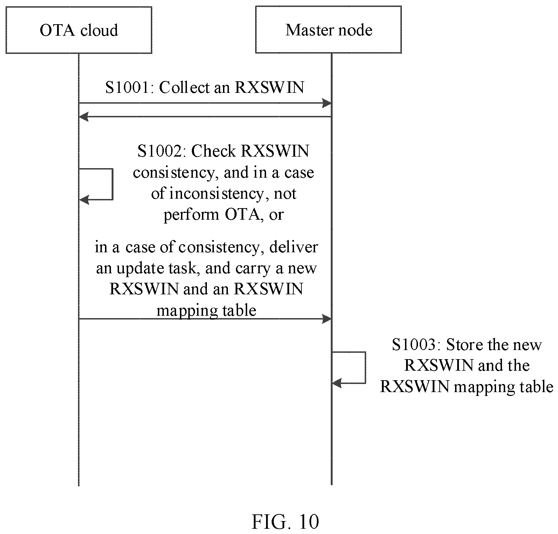

For example, FIG. 10 is a schematic flowchart of performing consistency determining by a cloud according to an embodiment of this application. In the embodiment corresponding to FIG. 10, updating the first software version information and/or the first identification number when the first software version information is consistent with the second software version information is described by using an example in which the cloud is an OTA cloud, the vehicle end includes a master node, the first mapping is an RXSWIN mapping, and the identification number is an RXSWIN. This example does not constitute a limitation on this embodiment of this application.

As shown in FIG. 10, a process in which the cloud performs consistency determining may include the following steps.

S1001: The OTA cloud collects an RXSWIN identifier on the master node.

S1002: The OTA cloud checks RXSWIN consistency.

For example, if the OTA cloud determines that an RXSWIN identifier of the vehicle end is inconsistent with an RXSWIN identifier in the first mapping, the OTA cloud may determine not to perform OTA.

If the OTA cloud determines that an RXSWIN identifier of the vehicle end is consistent with an RXSWIN identifier in the first mapping, the OTA cloud may deliver an update task to the master node, where the update task may carry a new RXSWIN identifier and an RXSWIN mapping table.

S1003: The master node stores the new RXSWIN identifier and the RXSWIN mapping table.

Based on this, the cloud and the vehicle end may maintain, based on a matching relationship between an identification number and a software version, consistency between the software version information and/or the identification number of the vehicle end and a mapping relationship of the cloud, to eliminate a case in which a software version upgraded by using the OTA is inconsistent with a software version used during admission, and ensure normal upgrade of vehicle software.

The foregoing is a process in which the vehicle end and/or the cloud maintain/maintains consistency between the software version information and the identification number. The following describes a process in which consistency between software version information and an identification number is ensured in a process of upgrading vehicle software by using the OTA.

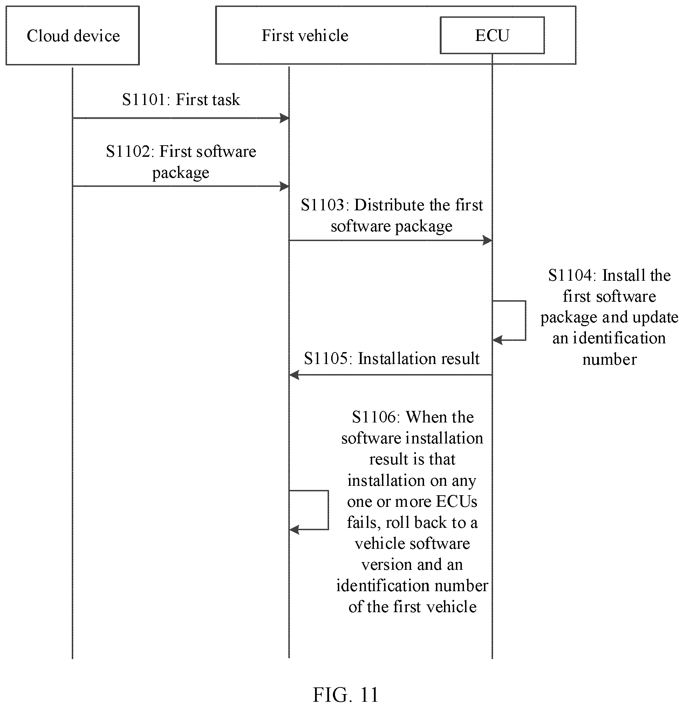

For example, FIG. 11 is a schematic flowchart of updating software according to an embodiment of this application. As shown in FIG. 11, subjects for updating software may include a cloud and a first vehicle. The first vehicle may include a master node and one or more ECUs.

As shown in FIG. 11, the process of updating the software may include the following steps.

S1101: The cloud sends a first task to the first vehicle.

Adaptively, the first vehicle receives the first task, and may update first software version information and/or a first identification number based on the first task. A subject that receives the first task may be the master node in the first vehicle.

In this embodiment of this application, the first task indicates to update the first software version information and/or the first identification number. When the first software version information is inconsistent with second software version information, the first task includes the first mapping; or when the first software version information is consistent with second software version information, the first task includes a second mapping. The second mapping includes an association relationship between third software version information and a third identification number. The third software version information is different from the second software version information, and/or the third identification number is different from the second identification number.

For example, when the cloud determines that the first software version information of the first vehicle is inconsistent with the second software version information of the cloud, it may be understood that in this case, a software version and/or an identification number of the first vehicle may be tampered with. In this case, the cloud may send the first task including the first mapping. The first mapping may be understood as an association relationship that is between software version information and an identification number and that is stored in the cloud before the software version and/or the identification number of the first vehicle are/is tampered with.

For example, when the cloud determines that the first software version information of the first vehicle is consistent with the second software version information of the cloud, it may be understood that in this case, the first vehicle device and the cloud have passed through consistency determining performed before upgrading software by using the OTA. In this case, the cloud may send the first task including the second mapping. The second mapping may be understood as a mapping relationship that is triggered by the OTA and that includes new software version information and a new identification number.

It may be understood that, when updating the software by using the OTA is insufficient to change a test parameter corresponding to the software during admission, the third identification number in the second mapping may be consistent with the first identification number stored in the first vehicle. For example, if a battery management system of the first vehicle is V1.0, the system of the first vehicle may support an endurance mileage of 500 km. When software upgrade is performed on the battery management system by using the OTA, the battery management system of the first vehicle is updated to V1.1, and the system of the first vehicle may support the endurance mileage of 500 km. In this case, the update of the battery management system does not change a specific parameter of the endurance mileage during admission. Therefore, in this case, when the first vehicle performs software upgrade by using the OTA, third software version information in the second mapping delivered by the cloud is inconsistent with the first software version information stored in the first vehicle, and the third identification number in the second mapping may be consistent with the first identification number stored in the first vehicle.

S1102: The cloud sends a first software package to the first vehicle.

Adaptively, the first vehicle may receive the first software package, and update software of the vehicle based on the first software package. The software package may include software and software version information corresponding to the software.

In this embodiment of this application, when the first software version information is inconsistent with the second software version information, the first software package includes the second identification number; or when the first software version information is consistent with the second software version information, the first software package includes the third identification number.

For example, when the cloud determines that the first software version information of the first vehicle is inconsistent with the second software version information of the cloud, it may be understood that in this case, a software version or an identification number of the first vehicle may be tampered with. In this case, the cloud may send the first software package including the second identification number. The first software package may be understood as a software package stored in the cloud before the software version or the identification number of the first vehicle is tampered with. The software package stored in the cloud may store software and the identification number that are of the first vehicle and that are stored before the software version or the identification number of the first vehicle is tampered with.

For example, when the cloud determines that the first software version information of the first vehicle is consistent with the second software version information of the cloud, it may be understood that in this case, the first vehicle device and the cloud have passed through consistency determining performed before upgrading software by using the OTA. In this case, the cloud may send the first software package including the third identification number. The first software package may be understood as a software package triggered by the OTA.

It may be understood that, when updating the software by using the OTA is insufficient to change the parameter during admission, the third identification number may be consistent with the first identification number. A specific process thereof is not described again.

S1103: The first vehicle sends, to ECUs, first software packages corresponding to the ECUs.

Adaptively, each ECU receives the first software package. There may be one or more ECUs. For example, when there are N ECUs, the first vehicle may send, to the N ECUs, first software packages corresponding to the N ECUs, where N is a positive integer.

For example, when the first vehicle includes the master node, the master node may receive the first software package sent by the cloud, and distribute the first software package to corresponding ECUs.

S1104: Install the first software package on the ECU and update an identification number.

In this embodiment of this application, the identification number may be the second identification number or the third identification number.

For example, when an exception occurs in a process of installing the first software package on the ECU, the ECU may roll back to software existing before the installation, and restore the first identification number. That the ECU rolls back to the software existing before the installation may indicate that the ECU restores the first software version information.

For example, when the first software package is successfully installed on the ECU, the ECU may update the first identification number and the first software version information.

S1105: The ECU sends an installation result to the first vehicle.

Adaptively, the first vehicle receives the installation result. The installation result may be that the installation succeeds, or installation on any one or more ECUs fails.

S1106: When the software installation result is that the installation on the any one or more ECUs fails, roll back to the vehicle software version and the identification number of the first vehicle.

Optionally, when the software installation result is that the installation succeeds, the vehicle software version and/or the identification number may be updated. For example, when the software installation result is that the installation succeeds, and updated software is insufficient to change the vehicle software version, the vehicle software version may not be changed.

Based on this, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

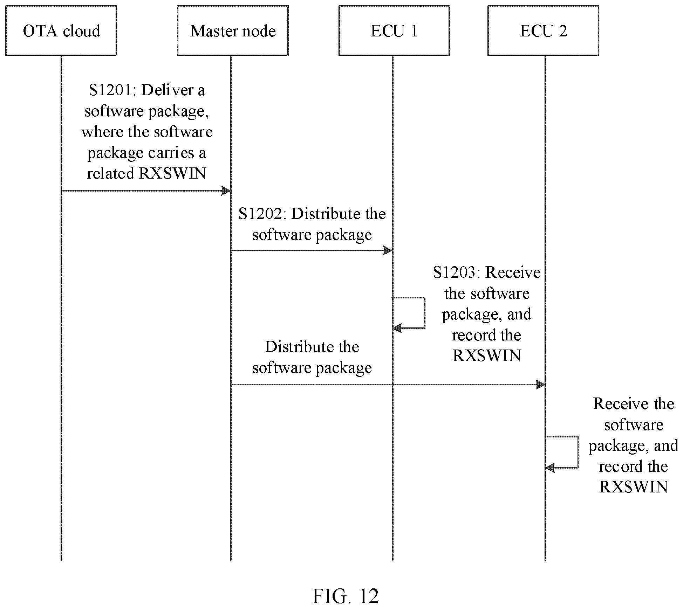

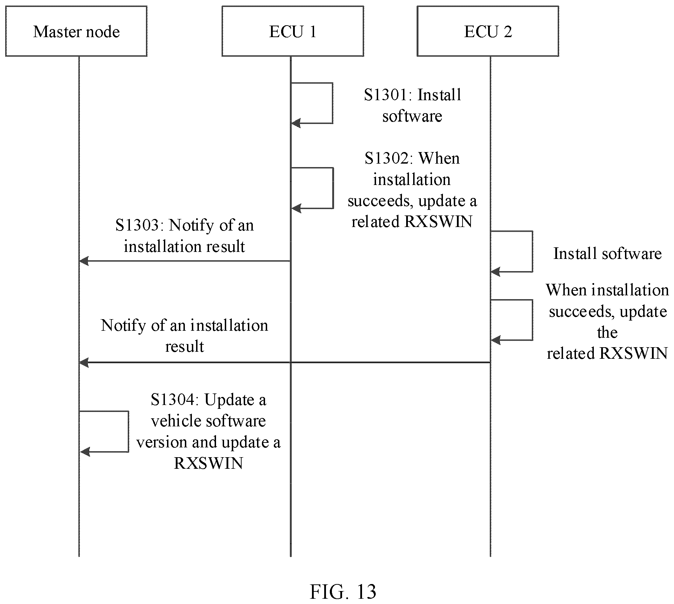

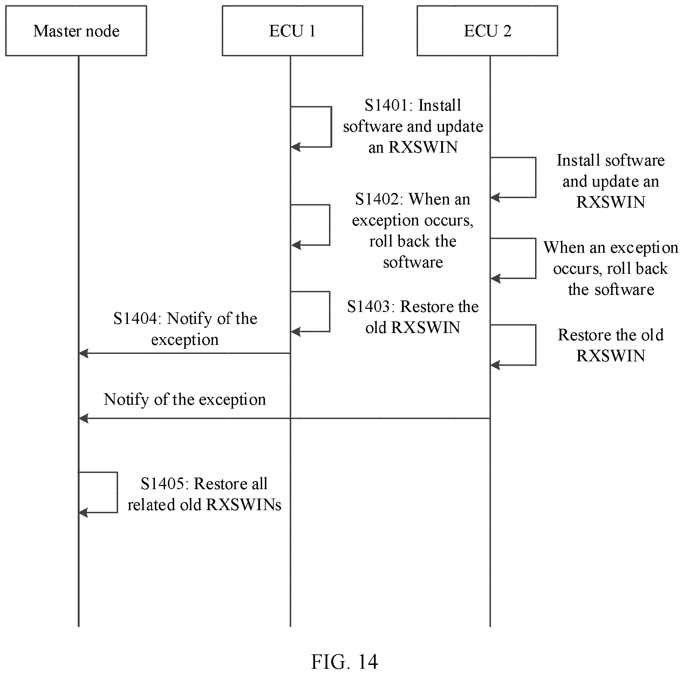

Based on the content described in the foregoing embodiments, to better understand embodiments of this application, the following separately describes an overall process of updating software on a vehicle end. Specifically, the process may include: The cloud delivers a software package to the vehicle end (as shown in the embodiment corresponding to FIG. 12); the software package is successfully installed on the vehicle end (as shown in the embodiment corresponding to FIG. 13); and the software package fails to be installed on the vehicle end (as shown in the embodiment corresponding to FIG. 14).

FIG. 12 is a schematic flowchart of delivering a software package to a vehicle end by a cloud according to an embodiment of this application. In the embodiment corresponding to FIG. 12, a process in which the cloud delivers the software package to the vehicle end is described by using an example in which the cloud is an OTA cloud, the vehicle end includes a master node, an ECU 1, and an ECU 2, an identification number is an RXSWIN, and a first mapping is an RXSWIN mapping. This example does not constitute a limitation on this embodiment of this application.

As shown in FIG. 12, the process in which the cloud delivers the software package may include the following steps.

S1201: The OTA cloud delivers the software package to the master node.

Adaptively, the master node receives the software package delivered by the OTA cloud. The software package carries a related RXSWIN identifier.

S1202: The master node distributes the software package to the ECU 1 and the ECU 2.

Adaptively, the ECU 1 and the ECU 2 receive the software package sent by the master node. The ECU 1 and the ECU 2 may be ECUs corresponding to the software package.

S1203: The ECU 1 and the ECU 2 receive the software package, and record the RXSWIN identifier.

Based on this, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

The foregoing is the process in which the cloud delivers the software package to the vehicle end. The following describes a process in which the software package is successfully installed on the vehicle end.

For example, FIG. 13 is a schematic flowchart of installing a software package on a vehicle end according to an embodiment of this application. In the embodiment corresponding to FIG. 13, a process in which the software package is successfully installed on the vehicle end is described by using an example in which the cloud is an OTA cloud, the vehicle end includes a master node, an ECU 1, and an ECU 2, an identification number is an RXSWIN, and a first mapping is an RXSWIN mapping. This example does not constitute a limitation on this embodiment of this application.

As shown in FIG. 13, the process in which the software package is installed on an ECU may include the following steps.

S1301: Install software on the ECU 1 and the ECU 2.

For example, after the master node distributes the software package to the ECU 1 and the ECU 2, the software may be installed on the ECU 1 and the ECU 2 based on the software package.

S1302: When the software is successfully installed on the ECU 1 and the ECU 2, update a related RXSWIN.

S1303: The ECU 1 and the ECU 2 send installation results to the master node.

S1304: The master node updates a vehicle software version and/or updates an RXSWIN.

Alternatively, the vehicle software version may not be changed. Details are not described herein again.

Based on this, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

The foregoing is the process in which the software package is successfully installed on the vehicle end. In a possible implementation, an exception may occur when the software package is installed on the vehicle end. The following describes a process in which the software package fails to be installed on the vehicle end.

For example, FIG. 14 is another schematic flowchart of installing a software package on a vehicle end according to an embodiment of this application. In the embodiment corresponding to FIG. 14, a process in which the software package fails to be installed on the vehicle end is described by using an example in which the cloud is an OTA cloud, the vehicle end includes a master node, an ECU 1, and an ECU 2, an identification number is an RXSWIN, and a first mapping is an RXSWIN mapping. This example does not constitute a limitation on this embodiment of this application.

As shown in FIG. 14, the process in which the software package is installed on an ECU may include the following steps.

S1401: Install software on the ECU 1 and the ECU 2, and update a related RXSWIN.

S1402: When an exception occurs in a process of installing the software on the ECU 1 and the ECU 2, roll back the software.

The ECU 1 and the ECU 2 store software existing before the software package is installed. When the exception occurs in the process of installing the software on the ECU 1 and the ECU 2, the ECU 1 and the ECU 2 may roll back to the software existing before the software package is installed.

S1403: The ECU 1 and the ECU 2 restore the old RXSWIN.

The ECU 1 and the ECU 2 store the RXSWIN existing before the software package is installed. When the exception occurs in the process of installing the software on the ECU 1 and the ECU 2, the ECU 1 and the ECU 2 may roll back to the RXSWIN existing before the software package is installed.

S1404: The ECU 1 and the ECU 2 notify the master node of the exception.

S1405: The master node restores the related old RXSWIN.

Based on this, a matching relationship between the software version information and the identification number can be ensured in an OTA software upgrade process, to eliminate, based on consistency between the software version and the identification number of the vehicle end and/or the cloud, a case in which a software version upgraded by using the OTA is inconsistent with a software version used during admission, and ensure normal upgrade of vehicle software.

The foregoing describes the method provided in embodiments of this application with reference to FIG. 6 to FIG. 14. The following describes an apparatus that is provided in embodiments of this application and that performs the foregoing method.

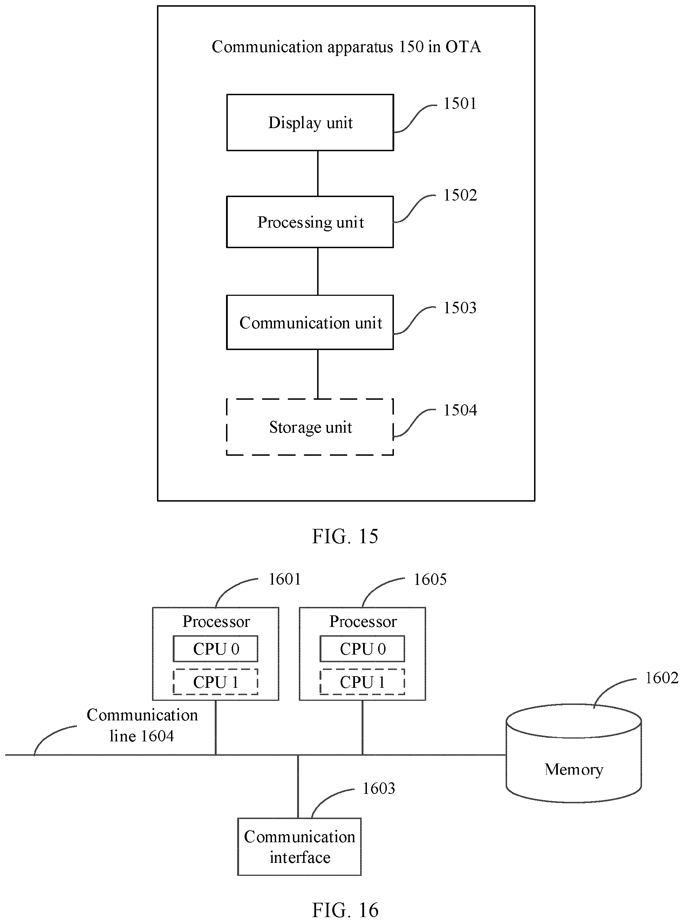

For example, FIG. 15 is a schematic diagram of a structure of an OTA-based communication apparatus according to an embodiment of this application. As shown in FIG. 8, an OTA-based communication apparatus 150 may be used in a communication device, a circuit, a hardware component, or a chip. The OTA-based communication apparatus includes: a display unit 1501, a processing unit 1502, and a communication unit 1503. The display unit 1501 is configured to support a display step performed in a network configuration method. The processing unit 1502 is configured to support the OTA-based communication apparatus in performing an information processing step. The communication unit 1503 is configured to support the OTA-based communication apparatus in performing a data sending or receiving step.

Specifically, an embodiment of this application provides an OTA-based communication apparatus. The communication unit 1503 is configured to obtain first information and second information, where the first information includes first software version information and/or a first identification number, the second information includes a first mapping, the first mapping includes an association relationship between second software version information and a second identification number, and the identification number indicates permission information of a software version. The processing unit 1502 is further configured to: verify, based on the first information and the second information, consistency between the first software version information and the second software version information.

In a possible implementation, the processing unit 1502 is specifically configured to: when the first software version information is inconsistent with the second software version information, and/or the first identification number is inconsistent with the second identification number, determine that the first software version information is inconsistent with the second software version information; or when the first software version information is consistent with the second software version information, and/or the first identification number is consistent with the second identification number, determine that the first software version information is consistent with the second software version information.

In a possible implementation, the processing unit 1502 is further configured to: when the first software version information is inconsistent with the second software version information, update the first software version information and/or the first identification number; or when the first software version information is consistent with the second software version information, update the first software version information and/or the first identification number.

In a possible implementation, the communication unit 1503 is configured to send a first task to a first vehicle, where the first task indicates to update the first software version information and/or the first identification number. When the first software version information is inconsistent with the second software version information, the first task includes the first mapping; or when the first software version information is consistent with the second software version information, the first task includes a second mapping. The second mapping includes an association relationship between third software version information and a third identification number.

In a possible implementation, the communication unit 1503 is further configured to send a first software package to the first vehicle, where the first software package is used to update software version information corresponding to the first vehicle. When the first software version information is inconsistent with the second software version information, the first software package includes the second identification number; or when the first software version information is consistent with the second software version information, the first software package includes the third identification number.

In a possible implementation, the communication unit 1503 is further configured to: when the first software version information is inconsistent with the second software version information, send the first software version information, the first identification number, and/or alarm information to a server and/or a display device of the first vehicle, where the alarm information indicates that an identification number and/or software version information of the vehicle are/is inconsistent with a mapping relationship of the server.

In a possible implementation, the communication unit 1503 is specifically configured to receive a first task from a server, where the first task indicates to update the first software version information and/or the first identification number. When the first software version information is inconsistent with the second software version information, the first task includes the first mapping; or when the first software version information is consistent with the second software version information, the first task includes a second mapping. The second mapping includes an association relationship between third software version information and a third identification number.

In a possible implementation, the communication unit 1503 is further configured to receive a first software package from the server, where the first software package is used to update software version information corresponding to the first vehicle. When the first software version information is inconsistent with the second software version information, the first software package includes the second identification number; or when the first software version information is consistent with the second software version information, the first software package includes the third identification number.

In a possible implementation, the identification number includes a first regulation-related software identification number RXSWIN.

In a possible embodiment, the OTA-based communication apparatus may further includes a storage unit 1504. The processing unit 1502 and the storage unit 1504 are connected through a line.

The storage unit 1504 may include one or more memories. The memory may be a component that is configured to store a program or data and that is in one or more devices or circuits.

The storage unit 1504 may exist independently, and is connected to the processing unit 1502 of the OTA-based communication apparatus through a communication line. Alternatively, the storage unit 1504 may be integrated with the processing unit 1502.

The communication unit 1503 may be an input/output interface, a pin, a circuit, or the like. For example, the storage unit 1504 may store a computer-executable instruction of a method of a radar or a target device, so that the processing unit 1502 performs the method of the radar or the target device in the foregoing embodiment. The storage unit 1504 may be a register, a cache, a RAM, or the like. The storage unit 1504 may be integrated with the processing unit 1502. The storage unit 1504 may be a ROM or another type of static storage device that can store static information and instructions. The storage unit 1504 may be independent of the processing unit 1502.

FIG. 16 is a schematic diagram of a hardware structure of a control device according to an embodiment of this application. As shown in FIG. 16, the control device includes a processor 1601, a communication line 1604, and at least one communication interface (a communication interface 1603 is used as an example in FIG. 16 for description).

The processor 1601 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1604 may include a circuit for transferring information between the foregoing components.

The communication interface 1603 is any apparatus such as a transceiver, and is configured to communicate with another device or communication network such as the Ethernet or a wireless local area network (wireless local area network, WLAN).

Possibly, the control device may further include a memory 1602.

The memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction structure or a data structure and that can be accessed by a computer. However, this is not limited thereto. The memory may exist independently, and is connected to the processor through the communication line 1604. Alternatively, the memory may be integrated with the processor.

The memory 1602 is configured to store computer-executable instructions for executing the solutions in this application, and the processor 1601 controls execution of the computer-executable instructions. The processor 1601 is configured to execute the computer-executable instructions stored in the memory 1602, to implement the OTA-based communication method provided in embodiments of this application.

Possibly, the computer-executable instructions in this embodiment of this application may also be referred to as application program code. This is not specifically limited in this embodiment of this application.

During specific implementation, in an embodiment, the processor 1601 may include one or more CPUs, for example, a CPU 0 and a CPU 1 in FIG. 16.

During specific implementation, in an embodiment, the control device may include a plurality of processors, for example, the processor 1601 and a processor 1605 in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

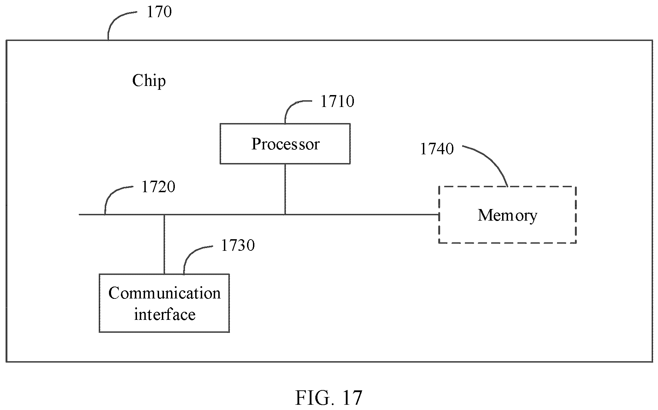

For example, FIG. 17 is a schematic diagram of a structure of a chip according to an embodiment of this application. A chip 170 includes one or more (including two) processors 1720 and a communication interface 1730.

In some implementations, a memory 1740 stores the following elements: an executable module or a data structure, a subset thereof, or an extended set thereof.

In this embodiment of this application, the memory 1740 may include a read-only memory and a random access memory, and provide instructions and data to the processor 1720. A part of the memory 1740 may further include a non-volatile random access memory (non-volatile random access memory, NVRAM).

In this embodiment of this application, the memory 1740, the communication interface 1730, and the memory 1740 are coupled together through a bus system 2020. In addition to a data bus, the bus system 2020 may further include a power bus, a control bus, a status signal bus, and the like. For ease of description, various types of buses in FIG. 17 are marked as the bus system 2020.

The methods described in the foregoing embodiments of this application may be applied to the processor 1720, or may be implemented by the processor 1720. The processor 1720 may be an integrated circuit chip and has a signal processing capability. In an implementation process, steps of the foregoing methods may be completed by using an integrated logic circuit of hardware in the processor 1720, or by using instructions in a form of software. The processor 1720 may be a general-purpose processor (for example, a microprocessor or a conventional processor), a digital signal processor (digital signal processor, DSP), an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 1720 may implement or perform the methods, the steps, and the logical block diagrams disclosed in embodiments of the present invention.

Steps of the methods disclosed with reference to embodiments of this application may be directly performed and completed by using a hardware decoding processor, or may be performed and completed by using a combination of hardware and software modules in the decoding processor. The software module may be located in a mature storage medium in the art, for example, a random access memory, a read-only memory, a programmable read-only memory, or an electrically erasable programmable read-only memory (electrically erasable programmable read-only memory, EEPROM). The storage medium is located in the memory 1740. The processor 1720 reads information in the memory 1740 and completes the steps of the foregoing methods in combination with hardware of the processor 1720.

In the foregoing embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. All or some of the methods described in the foregoing embodiments may be implemented by software, hardware, firmware, or any combination thereof. The computer-readable medium may include a computer storage medium and a communication medium, and may further include any medium that can transfer a computer program from one place to another. The storage medium may be any target medium that can be accessed by a computer.

In a possible design, the computer-readable medium may include a compact disc read-only memory (compact disc read-only memory, CD-ROM), an RAM, an ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or radio technologies (such as infrared, radio, and microwave), the coaxial cable, the optical fiber cable, the twisted pair, the DSL, or the radio technologies such as infrared, radio, and microwave are included in a definition of the medium. Magnetic disks and optical discs used in this specification include a compact disc (CD), a laser disc, an optical disc, a digital versatile disc (digital versatile disc, DVD), a floppy disk, and a Blu-ray disc. The magnetic disks usually magnetically reproduce data, and the optical discs optically reproduce data by using laser light.

The foregoing combinations also need to be included within the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An over-the-air technology OTA-based communication method, comprising:
obtaining first information and second information, wherein the first information comprises first software version information and/or a first identification number, the second information comprises a first mapping, the first mapping comprises an association relationship between second software version information and a second identification number, and the identification number indicates permission information of a software version; and
verifying, based on the first information and the second information, consistency between the first software version information and the second software version information corresponding to the first mapping.

2. The method according to claim 1, wherein the verifying, based on the first information and the second information, consistency between the first software version information and the second software version information corresponding to the first mapping comprises:
when the first software version information is inconsistent with the second software version information, and/or the first identification number is inconsistent with the second identification number, determining that the first software version information is inconsistent with the second software version information; or
when the first software version information is consistent with the second software version information, and/or the first identification number is consistent with the second identification number, determining that the first software version information is consistent with the second software version information.

3. The method according to claim 1 or 2, wherein the method further comprises:
when the first software version information is inconsistent with the second software version information, updating the first software version information and/or the first identification number; or
when the first software version information is consistent with the second software version information, updating the first software version information and/or the first identification number.

4. The method according to claim 3, wherein before the updating the first software version information and/or the first identification number, the method further comprises:
sending a first task to a first vehicle, wherein the first task indicates to update the first software version information and/or the first identification number, wherein
when the first software version information is inconsistent with the second software version information, the first task comprises the first mapping; or
when the first software version information is consistent with the second software version information, the first task comprises a second mapping, and the second mapping comprises an association relationship between third software version information and a third identification number.

5. The method according to claim 3 or 4, wherein the method further comprises:
sending a first software package to the first vehicle, wherein the first software package is used to update software version information corresponding to the first vehicle, wherein
when the first software version information is inconsistent with the second software version information, the first software package comprises the second identification number; or
when the first software version information is consistent with the second software version information, the first software package comprises the third identification number.

6. The method according to any one of claims 1 to 3, wherein the method further comprises:
when the first software version information is inconsistent with the second software version information, sending the first software version information, the first identification number, and/or alarm information to a server and/or a display device of a first vehicle, wherein the alarm information indicates that an identification number and/or software version information of the first vehicle are/is inconsistent with a mapping relationship of the server.

7. The method according to claim 3, wherein the updating the first software version information and/or the first identification number comprises:
receiving a first task from a server, wherein the first task indicates to update the first software version information and/or the first identification number, wherein
when the first software version information is inconsistent with the second software version information, the first task comprises the first mapping; or
when the first software version information is consistent with the second software version information, the first task comprises a second mapping, and the second mapping comprises an association relationship between third software version information and a third identification number.

8. The method according to claim 7, wherein the method further comprises:
receiving a first software package from the server, wherein the first software package is used to update software version information corresponding to the first vehicle, wherein
when the first software version information is inconsistent with the second software version information, the first software package comprises the second identification number; or
when the first software version information is consistent with the second software version information, the first software package comprises the third identification number.

9. The method according to any one of claims 1 to 8, wherein the identification number comprises a first regulation-related software identification number RXSWIN.

10. An over-the-air technology OTA-based communication apparatus, wherein the apparatus comprises:
a communication unit, configured to obtain first information and second information, wherein the first information comprises first software version information and/or a first identification number, the second information comprises a first mapping, the first mapping comprises an association relationship between second software version information and a second identification number, and the identification number indicates permission information of a software version; and
a processing unit, further configured to: verify, based on the first information and the second information, consistency between the first software version information and the second software version information corresponding to the first mapping.

11. The apparatus according to claim 10, wherein the processing unit is specifically configured to:
when the first software version information is inconsistent with the second software version information, and/or the first identification number is inconsistent with the second identification number, determine that the first software version information is inconsistent with the second software version information; or
when the first software version information is consistent with the second software version information, and/or the first identification number is consistent with the second identification number, determine that the first software version information is consistent with the second software version information.

12. The apparatus according to claim 10 or 11, wherein the processing unit is further configured to:
when the first software version information is inconsistent with the second software version information, update the first software version information and/or the first identification number; or
when the first software version information is consistent with the second software version information, update the first software version information and/or the first identification number.

13. The apparatus according to claim 12, wherein the communication unit is specifically configured to:
send a first task to a first vehicle, wherein the first task indicates to update the first software version information and/or the first identification number, wherein
when the first software version information is inconsistent with the second software version information, the first task comprises the first mapping; or when the first software version information is consistent with the second software version information, the first task comprises a second mapping, and the second mapping comprises an association relationship between third software version information and a third identification number.

14. The apparatus according to claim 12 or 13, wherein the communication unit is further configured to:
send a first software package to the first vehicle, wherein the first software package is used to update software version information corresponding to the first vehicle, wherein
when the first software version information is inconsistent with the second software version information, the first software package comprises the second identification number; or when the first software version information is consistent with the second software version information, the first software package comprises the third identification number.

15. The apparatus according to any one of claims 10 to 12, wherein the communication unit is further configured to:
when the first software version information is inconsistent with the second software version information, send the first software version information, the first identification number, and/or alarm information to a server and/or a display device of a first vehicle, wherein the alarm information indicates that an identification number and/or software version information of the first vehicle are/is inconsistent with a mapping relationship of the server.

16. The apparatus according to claim 12, wherein the communication unit is specifically configured to:
receive a first task from a server, wherein the first task indicates to update the first software version information and/or the first identification number, wherein
when the first software version information is inconsistent with the second software version information, the first task comprises the first mapping; or when the first software version information is consistent with the second software version information, the first task comprises a second mapping, and the second mapping comprises an association relationship between third software version information and a third identification number.

17. The apparatus according to claim 16, wherein the communication unit is further configured to:
receive a first software package from the server, wherein the first software package is used to update software version information corresponding to the first vehicle, wherein
when the first software version information is inconsistent with the second software version information, the first software package comprises the second identification number; or when the first software version information is consistent with the second software version information, the first software package comprises the third identification number.

18. The apparatus according to any one of claims 10 to 17, wherein the identification number comprises a first regulation-related software identification number RXSWIN.

19. An OTA-based communication apparatus, comprising at least one processor that is configured to invoke a program in a memory, to perform the method according to any one of claims 1 to 9.

20. An OTA-based communication apparatus, comprising at least one processor and an interface circuit, wherein the interface circuit is configured to provide information input and/or information output for the at least one processor, and the at least one processor is configured to perform the method according to any one of claims 1 to 9.

21. A chip, comprising at least one processor and an interface, wherein
the interface is configured to provide program instructions or data for the at least one processor; and
the at least one processor is configured to execute the program instructions, to implement the method according to any one of claims 1 to 9.

22. A computer-readable storage medium, wherein the computer-readable storage medium stores instructions, and when the instructions are run, a computer is enabled to perform the method according to any one of claims 1 to 9.

23. A computer program product, comprising a computer program, wherein when the computer program is run, a computer is enabled to perform the method according to any one of claims 1 to 9.
